# EUROPEAN PATENT APPLICATION

(11) **EP 3 770 289 A1**
(43) Date of publication of application: **27.01.2021**
(21) Application number: 18910935.8
(22) Date of filing: 25.12.2018
(51) Int. Cl.: C22C 38/00, C21D 8/02, C22C 38/16, C22C 38/58

(54) **WEAR-RESISTANT STEEL AND METHOD FOR PRODUCING SAME**

(30) Priority: 22.03.2018 JP 2018053878
(71) Applicant: NIPPON STEEL CORPORATION, Chiyoda-ku Tokyo 100-8071 (JP)
(72) Inventor: MIZOGUCHI, Masaki, Tokyo 100-8071 (JP); KAMO, Takahiro, Tokyo 100-8071 (JP); HARA, Motomichi, Tokyo 100-8071 (JP); MIYAKE, Takumi, Tokyo 100-8071 (JP); TAKAHASHI, Yasunori, Tokyo 100-8071 (JP)
(74) Representative: Vossius & Partner Patentanwälte Rechtsanwälte mbB
(86) International application number: PCT/JP2018/047681
(87) International publication number: WO 2019/181130

(57) **Abstract**

Abrasion resistant steel having a chemical composition comprising, by mass%, C: 0.10 to 0.20%, Si: 0.01 to 1.20%, Mn: 0.01 to 2.00%, P: less than 0.017%, S: 0.010% or less, Cu: 0.01 to 0.70%, Ni: 0.01 to 1.00%, Cr: 0 to 1.50%, Mo: 0 to 0.80%, W: 0 to 0.50%, Nb: 0 to 0.050%, V: 0 to 0.20%, Ti: 0 to 0.030%, B: 0 to 0.0030%, N: 0.0001 to 0.0070%, Al: 0.001 to 0.10%, Ca: 0 to 0.0050%, Zr: 0 to 0.0050%, Mg: 0 to 0.0050%, REM: 0 to 0.0050%, and a balance of Fe and impurities, having metal structures at a position of 1/4 of the thickness from the surface in a thickness direction, which have a total of the area ratios of martensite and lower bainite of 50 to 100% and a prior austenite average grain size of 5 to 23 µm, and having a Brinell hardness at a position of 1 mm from the surface in the thickness direction of 360 to 440, and a method for producing the same.

## Description

### FIELD

The present invention relates to abrasion resistant steel having a high toughness suitable for use as a component part of a construction machine, industrial machine, or other machine in which abrasion resistance is demanded and to a method for producing the same.

### BACKGROUND

The abrasion resistance of a component part of a machine is strongly governed by its surface hardness, so high hardness steel has been used for component parts of machines such as construction machines for civil engineering or mining use or industrial machines in which abrasion resistance is demanded. For this high hardness steel, the property of having stable abrasion resistance making it able to withstand long term use has been demanded. Further, in recent years, demand for construction machines or industrial machines used in cold regions has been increasing. A steel material having a low temperature toughness suitable for use in such cold regions has been demanded.

PTL 1 proposes a method for producing abrasion resistant steel plate comprising controlling the chemical constituents, heating then hot rolling, then reheating and accelerated cooling.

PTL 2 proposes a method for producing abrasion resistant thick gauge steel plate having low temperature toughness comprising controlling the chemical constituents and using microprecipitates having a diameter of 50 nm or less to inhibit the growth of austenite grains during production.

PTL 3 proposes a method for producing low alloy abrasion resistant steel comprising controlling the chemical constituents and heating, then hot rolling and applying accelerated cooling right after hot rolling.

### [CITATIONS LIST]

### [PATENT LITERATURE]

[PTL 1] Japanese Unexamined Patent Publication No. 2012-214890
[PTL 2] Japanese Unexamined Patent Publication No. 2014-194042
[PTL 3] Japanese Unexamined Patent Publication No. 2016-509631

### SUMMARY

### [TECHNICAL PROBLEM]

The steel plate produced by the method described in PTL 1 has a large C content, so is difficult to make higher in toughness. Further, in the method described in PTL 1, the rolling conditions at the time of hot rolling were not sufficiently studied. Therefore, there was still room for improvement from the viewpoint of enhancing the toughness. Furthermore, the examples of PTL 1 had many with low reheating temperatures, therefore there were technical issues from the viewpoint of securing a high hardness.

PTL 2 taught to make microprecipitates disperse in the steel to inhibit the growth of austenite during reheating by the pinning effect and making the austenite grains finer. However, with the method of making such microprecipitates disperse in the steel, slight differences in the chemical constituents or differences in the reheating temperature cause large fluctuations in the state of dispersion of the precipitates, so it is difficult to stably refine the austenite grains and high toughness can not necessarily be realized. Further, the P content is not always kept sufficiently low. Furthermore, sometimes a drop in toughness is caused.

The steel plate produced by the method described in PTL 3 is difficult to make higher in toughness by a high C content. Further, the fact that by performing the cooling (quenching) right after hot rolling at a low temperature, anisotropy occurs in the steel material structures became clear by studies of the inventors. Therefore, there is the problem that the toughness when causing fracture in the rolling direction becomes lower.

The present invention was made in consideration of such a situation and has as its object to provide abrasion resistant steel having excellent low temperature toughness able to be used even in cold regions and a method for producing the same by a novel constitution. Specifically, it has as its object the provision of abrasion resistant steel having an absorption energy of 27J or more in a Charpy impact test at -40°C at a position of 1/4 of the thickness from the surface in a thickness direction and having a Brinell hardness (Brinell hardness at a position of 1 mm from the surface in the thickness direction) of 360 to 440 and a method for producing the same.

### [SOLUTION TO PROBLEM]

The gist of the present invention is as follows:
(1) Abrasion resistant steel having a chemical composition comprising, by mass%,
   C: 0.10 to 0.20%,
   Si: 0.01 to 1.20%,
   Mn: 0.01 to 2.00%,
   P: less than 0.017%,
   S: 0.010% or less,
   Cu: 0.01 to 0.70%,
   Ni: 0.01 to 1.00%,
   Cr: 0 to 1.50%,
   Mo: 0 to 0.80%,
   W: 0 to 0.50%,
   Nb: 0 to 0.050%,
   V: 0 to 0.20%,
   Ti: 0 to 0.030%,
   B: 0 to 0.0030%,
   N: 0.0001 to 0.0070%,
   Al: 0.001 to 0.10%,
   Ca: 0 to 0.0050%,
   Zr: 0 to 0.0050%,
   Mg: 0 to 0.0050%,
   REM: 0 to 0.0050%, and
   a balance of Fe and impurities,
   having metal structures having a total area ratios of martensite and lower bainite of 50 to 100% and a prior austenite average grain size of 5 to 23 µm at a position of 1/4 of a thickness from a surface in a thickness direction, and
   having a Brinell hardness of 360 to 440 at a position of 1 mm from the surface in the thickness direction.
(2) The abrasion resistant steel according to claim 1, wherein a thickness is 15 mm or more.
(3) A method for producing abrasion resistant steel, the method comprising:
   heating a slab having a chemical composition according to (1) or (2) to 1000 to 1350°C,
   hot rolling the heated slab at 1000 to over 825°C by a 20% or more rolling reduction, then at 825 to 730°C by a 10% or more rolling reduction, and ending the hot rolling at a temperature of 730°C or more,
   cooling the hot rolled steel plate, and
   reheating the cooled steel plate to 860°C or more, then quenching the reheated steel plate.

### [ADVANTAGEOUS EFFECTS OF INVENTION]

According to the present invention, abrasion resistant steel having excellent low temperature toughness enabling use in cold regions is obtained. In particular, even if the plate thickness is large, abrasion resistant steel having excellent low temperature toughness can be obtained.

### DESCRIPTION OF EMBODIMENTS

### Abrasion Resistant Steel

In general, if raising the hardness of a steel material, the toughness tends to fall. It is not easy to secure low temperature toughness by a high hardness steel material such as abrasion resistant steel. The inventors engaged in repeated studies to obtain abrasion resistant steel having high toughness at a low temperature and as a result learned to make the prior austenite average grain size 5 to 23 µm at a position of 1/4 of the thickness from the surface of the steel plate in the thickness direction.

The inventors engaged in various studies on the production conditions for refining prior austenite grains and as a result learned that at the time of reheating at the time of quenching, it is important to increase the nucleation sites when transforming bainite or martensite back to austenite. This is because by remarkably increasing the nucleation sites for back transformation to austenite, it is possible to refine the austenite grains when the structures finish being transformed back to austenite.

Further, they learned that to make the nucleation sites of the austenite back transformation increase, it is important to control the temperature and rolling reduction at the time of hot rolling.

Further, they learned that the nucleation sites of austenite at the time of reheating when quenching are the large grain boundaries such as the prior austenite grain boundaries of the bainite and martensite. Further, as explained above, by controlling the temperature and rolling reduction at the time of hot rolling, it is possible to refine and flatten the austenite grains at the time of hot rolling. Due to this, it becomes possible to increase the area of the large grain boundaries per unit volume at the time of reheating when quenching, that is, the nucleation sites for austenite back transformation. Furthermore, by such control at the time of hot rolling, it is believed there is also the effect that it is possible to give rolling strain to the steel and increase the energy stored at the crystal grain boundaries and thereby promote back transformation

Furthermore, controlling the temperature at the time of ending the hot rolling is also important. This is because if the temperature at the time of ending the hot rolling is made too low, the prior austenite grains after the reheating and quenching will become excessively refined and thereby the steel will not be sufficiently quenched and sometimes the hardness will drop.

Further, to obtain abrasion resistant steel having low temperature toughness, with just control of the average grain size of the prior austenite, the toughness is not sufficiently improved. The metal structures should be made ones mainly comprised of martensite and lower bainite. In addition, for improvement of toughness, suitable combination of various types of alloys is important.

In particular, when obtaining fine austenite grains, in general the hardenability tends to fall. Even if quenching, sometimes sufficient hardness cannot be obtained. Therefore, Cu and Ni may be added to raise the hardenability.

### Chemical Composition of Abrasion Resistant Steel

Below, the constituent requirements of the abrasion resistant steel according to the present invention will be explained. First, the reasons for limiting the chemical composition of the steel will be explained. In this Description, the "%" used for the chemical contents mean mass%.

### C: 0.10 to 0.20%

C (carbon) is an element effective for increasing the hardness of the steel. In the present invention, to secure the hardness, the lower limit of the C content is made 0.10%. The preferable lower limit of the C content is 0.11%. The more preferable lower limit of the C content is 0.12%. On the other hand, if the C content is more than 0.20%, sometimes the Brinell hardness of 440 or less in range targeted by the present invention will no longer be satisfied and, therefore, the toughness will fall, so the upper limit of the C content is made 0.20%. To better improve the toughness, the upper limit of the C content is preferably made 0.16%, more preferably is made 0.15%.

### Si: 0.01 to 1.20%

Si (silicon) is a deoxidizing element. It also contributes to improvement of the hardness by solution strengthening. Therefore, in the present invention, the lower limit of the Si content is made 0.01%. The lower limit of the Si content is preferably 0.10%, more preferably 0.20%. However, if the Si content is too high, the toughness and weldability deteriorate, so the upper limit of the Si content is made 1.20%. The preferable upper limit of the Si content is made 0.80%. The more preferable upper limit of the Si content is made 0.70% or 0.50%.

### Mn: 0.01 to 2.00%

Mn (manganese) contributes to raising the hardness through enhancement of the hardenability, so in the present invention, the lower limit of the Mn content is made 0.01%. To raise the strength further, the lower limit of the Mn content is preferably made 0.50%, more preferably is made 1.00%. On the other hand, if the Mn content is more than 2.00%, the toughness and weldability deteriorate, so the upper limit of the Mn content is made 2.00%. The preferable upper limit of the Mn content is 1.70% or 1.50%, while the more preferable upper limit is 1.40% or 1.30%.

### P: less than 0.017%

P (phosphorus) is an impurity. It segregates at the grain boundaries etc. and aggravates the occurrence of brittle fracture, so in the present invention, the P content is made less than 0.017%. Preferably, the P content is 0.013% or less. More preferably, the P content is 0.010% or less. If becoming 0.017% or more, the toughness remarkably falls. The P content is preferably as small as possible. The lower limit is 0%, but if making the content less than 0.001%, the production costs remarkably increase, so for example the lower limit of the P content may also be 0.001%, 0.002%, 0.003%, or 0.005%.

### S: 0.010% or less

S (sulfur) is an impurity. It forms MnS and other sulfides to lower the toughness, so in the present invention, the S content is made 0.010% or less. Preferably, the S content is 0.007% or less. More preferably, the S content is 0.005% or less. If more than 0.010%, the toughness sometimes falls. The S content is preferably as small as possible. The lower limit is 0%, but if making the content less than 0.001%, the production costs remarkably increase, so for example the lower limit of the S content may also be 0.001%, 0.002%, or 0.003%.

### Cu: 0.01 to 0.70%

Cu (copper) contributes to a rise in hardness through enhancement of the hardenability, so the Cu content is made 0.01% or more. The lower limit of the Cu content is preferably 0.10%, more preferably 0.20%. However, excessive addition of Cu causes a drop in toughness or fracture of the slab after casting or a drop in the weldability, so the upper limit of the Cu content is made 0.70%. Preferably, the upper limit of the Cu content is made 0.60%, more preferably it is made 0.50%.

### Ni: 0.01 to 1.00%

Ni (nickel) contributes to a rise in hardness through enhancement of the hardenability and, further, contributes to enhance of the toughness, so the lower limit of the Ni content is made 0.01%. The preferable Ni content is 0.10% or more, while the more preferable Ni content is 0.30% or more. Excessive addition of Ni invites a rise in the costs, so the upper limit of the Ni content is made 1.00%. Preferably, the upper limit of the Ni content is made 0.90%, more preferably is made 0.80%.

### Cr: 0 to 1.50%

Cr (chromium) is an element contributing to a rise in hardness through enhancement of the hardenability. The lower limit of the Cr content is 0%, but to reliably obtain this effect, the lower limit of the Cr content is preferably made 0.01%. Making it 0.05% is more preferable. However, if the Cr content is more than 1.50%, the toughness and weldability are made to fall. Therefore, the upper limit of the Cr content is made 1.50%. Preferably, the upper limit of the Cr content is made 1.00%, more preferably it is made 0.95%.

### Mo: 0 to 0.80%

Mo (molybdenum) is an element contributing to a rise in hardness through enhancement of the hardenability. The lower limit of the Mo content is 0%, but to reliably obtain this effect, the lower limit of the Mo content is preferably made 0.01%. Making it 0.05% is more preferable. However, if the Mo content is more than 0.80%, the toughness and weldability are made to fall. Therefore, the upper limit of the Mo content is made 0.80%. Preferably, the upper limit of the Mo content is made 0.60%, more preferably it is made 0.55%.

### W: 0 to 0.50%

W (tungsten) is an element contributing to a rise in hardness through enhancement of the hardenability. The lower limit of the W content is 0%, but to reliably obtain this effect, the lower limit of the W content is preferably made 0.001%. Making it 0.01% is more preferable while making it 0.05% is further more preferable. However, excessive addition of W causes the toughness and weldability to fall. Therefore, the upper limit of the content is made 0.50%. Preferably, the upper limit of the content is made 0.08%, more preferably the lower limit of the content is made 0.07% or 0.06%.

### Nb: 0 to 0.050%

Nb (niobium) is an element contributing to a rise in hardness through enhancement of the hardenability. The lower limit of the Nb content is 0%, but to reliably obtain this effect, the lower limit of the Nb content is preferably made 0.001% or more. Making it 0.005% is more preferable. On the other hand, if excessively adding Nb, the toughness and weldability are made to fall. Therefore, the upper limit of the Nb content is made 0.050%. Preferably, the upper limit of the Nb content is made 0.040%, more preferably it is made 0.030%.

### V: 0 to 0.20%

V (vanadium) is an element contributing to a rise in hardness through enhancement of the hardenability and precipitation strengthening. The lower limit of the V content is 0%, but to reliably obtain this effect, the lower limit of the V content is preferably made 0.001%. Making it 0.010% is more preferable. On the other hand, excessive addition of V causes the toughness and weldability to fall. Therefore, the upper limit of the V content is made 0.20%. Preferably, the upper limit of the V content is made 0.15%, more preferably it is made 0.10%.

### Ti: 0 to 0.030%

Ti (titanium) is an element which forms TiN to fix the N in the steel. The lower limit of the Ti content is 0%, but to reliably obtain this effect, the lower limit of the Ti content is preferably made 0.001%. Further, TiN has the effect of refining the austenite grains before hot rolling by the pinning effect, so the lower limit of the Ti content is more preferably made 0.005%. On the other hand, if the Ti content is more than 0.030%, coarse TiN is formed and the toughness is impaired, so the upper limit of the Ti content is made 0.030%. Preferably, the upper limit of the Ti content is made 0.020%, more preferably the upper limit of the Ti content is made 0.015%.

### B: 0 to 0.0030%

B (boron) is an element contributing to a rise in hardness through enhancement of the hardenability. Further, it is an element segregating at the grain boundaries and strengthening the grain boundaries to improve the toughness. The lower limit of the B content is 0%, but to reliably obtain this effect, the lower limit of the B content is preferably made 0.0001%. Making it 0.0005% is more preferable. On the other hand, excessive addition of B causes the toughness and weldability to fall. Therefore, the upper limit of the B content is made 0.0030%. Preferably, the upper limit of the B content is made 0.0015%, more preferably it is made 0.0010%.

### N: 0.0001 to 0.0070%

N (nitrogen) is an element which forms TiN and contributes to refining the metal structure and precipitation strengthening. Therefore, the lower limit of the N content is made 0.0001%. Preferably, the lower limit of the N content is made 0.0010%, more preferably it is made 0.0020%. However, if the N content becomes excessive, the toughness falls and becomes a cause of surface cracking at the time of casting or strain aging of the steel material produced and the resultant poor quality, so the upper limit of the N content is made 0.0070%. Preferably, the upper limit of the N content is made 0.0050%, more preferably it is made 0.0040%.

### Al: 0.001 to 0.10%

Al (aluminum) is necessary as a deoxidizing element in the present invention. The lower limit of the Al content for obtaining the effect of deoxidizing is made 0.001%. The lower limit of the Al content is preferably made 0.010%, while making it 0.030% is more preferable. On the other hand, if excessively adding Al, the Al oxides coarsen and become base points for brittle fracture and the toughness falls, so the upper limit of the Al content is made 0.10%. Preferably, the upper limit of the Al content is made 0.080%, more preferably it is made 0.070%.

### Ca: 0 to 0.0050%

Ca (calcium) is an element effective for control of the morphology of sulfides. It suppresses the formation of coarse MnS and contributes to improvement of the toughness. The lower limit of the Ca content is 0%, but to reliably obtain this effect, the lower limit of the Ca content is preferably made 0.0001%. Making it 0.0010% is more preferable. On the other hand, if the Ca content becomes more than 0.0050%, sometimes the toughness falls, so the upper limit of the Ca content is made 0.0050%. The preferable upper limit of the Ca content is 0.0030%, while the more preferable upper limit of the Ca content is 0.0025%.

### Zr: 0 to 0.0050%

Zr (zirconium) precipitates as carbides and nitrides and contributes to precipitation strengthening of the steel. The lower limit of the Zr content is 0%, but to reliably obtain this effect, the lower limit of the Zr content is preferably made 0.0001 %. Making it 0.0010% is more preferable. On the other hand, if the Zr content is more than 0.0050%, coarsening of the carbides and nitrides of Zr is invited and the toughness sometimes falls, so the upper limit of the Zr content is made 0.0050%. The preferable upper limit of the Zr content is 0.0030%, while the more preferable upper limit of the Zr content is 0.0020%.

### Mg: 0 to 0.0050%

Mg (magnesium) contributes to improvement of the toughness of the base material and toughness of the weld HAZ. The lower limit of the Mg content is 0%, but to reliably obtain this effect, the lower limit of the Mg content is preferably made 0.0001 %. Making it 0.0005% is more preferable. On the other hand, even if adding more than 0.0050% of Mg, the above effect is saturated, so the upper limit of the Mg content is made 0.0050%. The preferable upper limit of the content of Mg is 0.0040%, while the more preferable upper limit is 0.0030%.

### REM: 0 to 0.0050%

An REM (rare earth metal) contributes to improvement of the toughness of the base material and toughness of the weld HAZ. The lower limit of the REM content is 0%, but to reliably obtain this effect, the lower limit of the REM content is preferably made 0.0001 %. Making it 0.0005% is more preferable. On the other hand, even if adding more than 0.0050% of an REM, the above effect is saturated, so the upper limit of the REM content is made 0.0050%. The preferable upper limit of the content of an REM is 0.0040%, while the more preferable upper limit is 0.0030%.

In the abrasion resistant steel of the present invention, the balance besides the above elements is comprised of Fe and impurities. Here, "impurities" are elements which enter due to various factors in the production process from ore, scraps, and other such raw materials when industrially producing abrasion resistant steel.

### Physical Properties of Abrasion Resistant Steel

Next, the reasons for limiting the area ratios of the metal structures and the prior austenite average grain size will be explained. In the present invention, the area ratios of the metal structures and the prior austenite average grain size are measured at a position of 1/4 of the thickness from the surface of the steel plate in the thickness direction.

### Area Ratios of Metal Structures

The area ratios of the metal structures of the abrasion resistant steel according to the present invention are measured by examining a sample taken from a position of 1/4 of the thickness from the surface of the steel plate in the thickness direction by a scan electron microscope (SEM) after corrosion by a Nital solution. Specifically, on an image of the corroded sample captured by the SEM, 20 x 20 straight lines are drawn at 10 µm intervals vertically and horizontally. Whether the metal structures at the positions of the lattice points are martensite, lower bainite, or upper bainite is judged. Next, from the results of judgment, the total of the area ratios of martensite and lower bainite (area %) at a position of 1/4 of the thickness from the surface in a thickness direction is calculated. Here, in this Description, "upper bainite" means the bainite with cementite present at the interfaces of the laths (between the laths) while "lower bainite" means the bainite with cementite present inside the laths. "Laths" are metal structures formed inside the prior austenite grain boundaries by martensite transformation. According to the present invention, to obtain abrasion resistant steel having low temperature toughness, the total of the area ratios of the martensite and lower bainite of the metal structures at a position of 1/4 of the thickness from the surface of the steel material in a thickness direction has to be 50 to 100%. If the total of the area ratios of the martensite and lower bainite is less than 50%, the toughness falls. Further, the upper limit of the total of the area ratios of the martensite and lower bainite is 100%, but may also be 99% or 98%. The lower limit of the total of the area ratios of martensite and lower bainite is preferably 60%, more preferably 70%, 80%, 90%, or 95%. The lower limit of the area ratio of the martensite may also be made 50%. If necessary, the lower limit of the area ratio of the martensite may also be made 70%, 80%, or 90%. The upper limit of the area ratio of the martensite may also be made 100% or 95%.

### Prior Austenite Average Grain Size

To determine the prior austenite average grain size in metal structures of the abrasion resistant steel according to the present invention, the cutting method (JIS G0551: 2013) is employed. Specifically, first, a sample taken from a position of 1/4 of the thickness from the surface in a thickness direction is corroded in a picric acid solution to expose the prior austenite grain boundaries. Next, the sample is photographed by an optical microscope and a length 2 mm to 10 mm straight test line (may also be divided into a plurality of sections) is drawn on the photographed image. The number of crystal grain boundaries which the test line crosses is counted. Next, the length of the test line is divided by the number of crystal grain boundaries which the test line crosses so as to find the average line segment length (that is, average line segment length=test line length/number of crystal grain boundaries which test line crosses) to thereby calculate the prior austenite average grain size at a position of 1/4 of the thickness from the surface in a thickness direction. According to the present invention, to obtain abrasion resistant steel having low temperature toughness, the prior austenite average grain size at a position of 1/4 of the thickness from the surface of the steel plate in the thickness direction has to be 23 µm or less. If the prior austenite average grain size is more than 23 µm, the toughness falls. Preferably, the prior austenite average grain size is 20 µm or less, more preferably 18 µm or less. Further, to prevent the hardenability from falling, the lower limit value of the prior austenite average grain size is made 5 µm. Preferably, the prior austenite average grain size is 7 µm or more, more preferably 9 µm or more or 11 µm.

In the abrasion resistant steel obtained by the method for production explained later, direct quenching by water cooling right after hot rolling is not employed, so there are no stretched prior austenite grains compared with case of direct quenching. For this reason, the average aspect ratio of the prior austenite grains at a position of 1/4 of the thickness from the surface of the steel plate in the thickness direction may be made 2.0 or less. This average aspect ratio is more preferably 1.5 or less, still more preferably 1.2 or less. In the present invention, the "average aspect ratio of the prior austenite grains" is the average value of the aspect ratio of the prior austenite grains at a position of 1/4 of the thickness from the surface of the steel plate in the thickness direction. However, the number of prior austenite grains measured was made 50 grains. Here, the aspect ratio of a certain single prior austenite grain is found by dividing a length of the prior austenite grain in the rolling direction by the length of the prior austenite grain in the plate thickness direction. The lengths of the prior austenite grains in the rolling direction and plate thickness direction can be measured by using an optical microscope to examine a surface of the steel plate including the thickness direction and rolling direction (surface vertical to width direction of steel plate), that is, an L-cross-section.

### Brinell Hardness

The hardness of the steel is shown by the Brinell hardness. The abrasion resistant steel according to the present invention has a Brinell hardness of 360 to 440. The measurement position of the Brinell hardness is a position of 1 mm from the steel material surface in the thickness direction. However, the measured surface is a surface parallel to the steel material surface. On this surface, the Brinell hardness is measured at three points. The average value is made the Brinell hardness of the present invention. The Brinell hardness is measured based on JIS Z2243:2008 using a diameter 10 mm cemented carbide sphere of an indenter and a 3000 kgf test force (HBW10/3000). The abrasion resistant steel according to the present invention has a Brinell hardness of preferably 370 or more, more preferably 380 or more, still more preferably 390 or more.

### Absorption Energy of Charpy Impact Test at -40°C

The toughness of steel can be shown by the absorption energy of a Charpy impact test. For example, if evaluated by a Charpy impact test at -40°C, the abrasion resistant steel according to the present invention has an absorption energy of 27J or more. The Charpy impact test is performed at -40°C based on JIS Z2242: 2005 using a Charpy test piece taken from a position of 1/4 of the thickness from the surface in a thickness direction for evaluating the low temperature toughness. The absorption energy of the Charpy impact test at -40°C of the abrasion resistant steel according to the present invention is preferably 40J or more, more preferably 50J or more, still more preferably 60J or more, most preferably 70J or more. The upper limit does not have to be particularly set, but may be 400J or 300J.

The abrasion resistant steel according to the present invention, that is, abrasion resistant steel having the above-mentioned chemical composition and having the metal structures at a position of 1/4 of the thickness in a thickness direction from the surface which have a total of the area ratios of the martensite and lower bainite of 50 to 100% and a prior austenite average grain size of 5 to 23 µm, has a 27J or more absorption energy of the Charpy impact test at -40°C. Further, the total of the area ratios of the martensite and lower bainite at the position of 1/4 of the thickness is 50 to 100%. The steel has a Brinell hardness of 360 to 440 at a position of 1 mm from the surface in the thickness direction.

### Thickness of Abrasion Resistant Steel

The thickness (plate thickness) of the abrasion resistant steel is not particularly restricted. For example, it may be 15 mm or more, 20 mm or more, 30 mm or more, or 40 mm or more and 100 mm or less, 90 mm or less, 80 mm or less, or 70 mm or less. According to the present invention, by controlling the temperature at the time of hot rolling, the rolling reduction, and the temperature at the time of end of hot rolling and furthermore controlling the temperature of the reheating and quenching, regardless of the plate thickness, it is possible to suitably refine the prior austenite grains and secure sufficient hardenability. More specifically, by hot rolling while controlling the temperature and rolling reduction, cooling, then reheating at a suitable temperature, it is possible to increase the nucleation sites of austenite back transformation. As a result, after back transformation to austenite is completed, it becomes possible to suitably refine the prior austenite grains inside of the steel material. This effect can be obtained regardless of the thickness of the steel plate. For example, the invention can also be applied to the case, difficult in the past, of a large plate thickness (for example, 15 mm or more, in particular, 40 mm or more). The shape of the abrasion resistant steel does not have to be particularly limited, but may be steel plate.

### Method for Producing Abrasion Resistant Steel

Next, one example of the method for producing the abrasion resistant steel according to the present invention will be explained.

The method for producing the slab used for producing the abrasion resistant steel according to the present invention is not particularly limited. For example, the slab can be obtained by casting molten steel after adjusting its chemical composition. The thickness of the slab is preferably made 200 mm or more from the viewpoint of productivity. Further, if considering reduction of segregation, homogenization of the heating temperature before hot rolling, etc., the thickness of the slab is preferably 350 mm or less. Such a slab can be used in the method for producing abrasion resistant steel according to the present invention explained below.

### Heating Step

Next, before performing the hot rolling, the slab is heated to 1000 to 1350°C. If the heating temperature of the slab is less than 1000°C, sometimes the alloy elements can no longer form solid solutions, so the lower limit is made 1000°C. On the other hand, if the heating temperature of the slab becomes higher than 1350°C, the scale on the surface of the slab used as the material liquefies and can obstruct production, so the upper limit is made 1350°C.

Note that, before this heating, it is also possible apply heating at 1100 to 1350°C for the purpose of forming solid solutions of the alloy elements or reducing segregation.

### Hot Rolling Step

In the present invention, to raise the density of austenite nucleation at the time of reheating by refinement and flattening of the prior austenite grains after hot rolling, the heated slab is hot rolled at 1000 to over 825°C by a 20% or more rolling reduction. If this rolling reduction falls under 20%, sometimes the prior austenite grains become insufficiently refined after hot rolling and the toughness falls. The rolling reduction at 1000 to over 825°C is preferably 25% or more, more preferably 30% or more. Note that to prevent a drop in the hardenability due to excessive refinement of the austenite grains at the time of reheating and quenching, the upper limit of the rolling reduction at 1000 to over 825°C is preferably made 75% or less. Further, to leave rolling strain after hot rolling and after cooling and raise the density of austenite nucleation at the time of reheating, furthermore, the hot rolling is performed at 825 to 730°C by a 10% or more rolling reduction. If this rolling reduction falls under 10%, sometimes the prior austenite grains are insufficiently refined after hot rolling and the toughness falls. The rolling reduction at 825 to 730°C is preferably 15% or more, more preferably 20% or more. Note that to prevent a drop in the hardenability due to excessive refinement of the austenite grains at the time of reheating and quenching, the upper limit of the rolling reduction at 825 to 730°C is preferably made 80%. Furthermore, in the present invention, the temperature at the time of the end of the hot rolling is 730°C or more. If the temperature at the time of the end of the hot rolling becomes less than 730°C, sometimes the prior austenite grains are excessively refined after reheating and quenching, the hardenability falls, and the hardness becomes insufficient. The temperature at the time of the end of the hot rolling is preferably 740°C or more, 750°C or more, or 760°C or more. Further, the temperature at the time of the end of the hot rolling is preferably 820°C or less, 810°C or less, 800°C or less, 790°C or less, or 780°C or less.

Due to the hot rolling step according to the present invention, it is possible to refine and flatten the austenite grains at the time of hot rolling. Due to this, it becomes possible to increase the nucleation sites of austenite back transformation at the time of reheating when quenching after hot rolling. Accordingly, even if the thickness of the steel plate is great, it is possible to suitably refine the prior austenite grains inside the steel plate and thereby becomes possible to secure high hardness and low temperature toughness.

### Cooling Step

Next, the hot rolled steel plate is cooled in the atmosphere. By not using water cooling, it is possible to greatly keep down shape defects in the steel plate. If water cooling, sometimes hydrogen embrittlement becomes a problem. Cooling need only be performed until for example 400°C.

### Reheating and Quenching Step

Next, the steel plate cooled after hot rolling is reheated to an 860°C or more temperature then acceleratedly cooled (water cooled) to quench it. That is, the steel plate obtained by performing this process is a reheated quenched material (RQ material). If the reheating temperature becomes less than 860°C, the alloy elements may insufficiently form solid solutions and the austenite back transformation may not be 100% completed so the hardenability may fall, therefore the lower limit of the reheating temperature is made 860°C. If the reheating temperature is too high, coarsening of the austenite grains may cause a drop in the toughness after quenching, so the upper limit of the reheating temperature is preferably 930°C. The quenching being performed by a cooling speed of 5°C/sec or more is preferable in securing the hardness and toughness. The steel plate obtained by performing this step (RQ material) can be made finer in prior austenite grains compared with steel plate obtained by direct quenching (DQ material) not including reheating and quenching. Further, compared with a DQ material, it is sometimes possible to reduce the average aspect ratio of the prior austenite grains.

The abrasion resistant steel produced by hot rolling and quenching under the above conditions has excellent hardness and low temperature toughness. Specifically, such abrasion resistant steel has a Brinell hardness of 360 to 440 and has an absorption energy of 27J or more of the Charpy impact test at -40°C at a position of 1/4 of the thickness from the surface in a thickness direction. Further, the method for producing the abrasion resistant steel according to the present invention does not require advanced steelmaking art and enables reduction of the production load and shortening of the work period. Therefore, it is possible to improve the reliability of construction machines etc. without detracting from their economicalness. The contribution to industry is extremely remarkable.

### EXAMPLES

Steels having the chemical compositions shown in Table 1 were smelted and continuously cast to produce thickness 240 to 300 mm slabs. The steels were smelted in a converter then primary deoxidized. Alloy elements were added to adjust the chemical compositions and vacuum degassing was performed in accordance with need. The thus obtained slabs were heated and hot rolled, cooled, then quenched to produce steel plates. Note that Production Nos. 57 and 58 (comparative examples) were DQ materials which were acceleratedly cooled (water cooled) right after hot rolling (were not reheated). The contents of the elements shown in Table 1 were found by chemically analyzing samples taken from the produced steels.

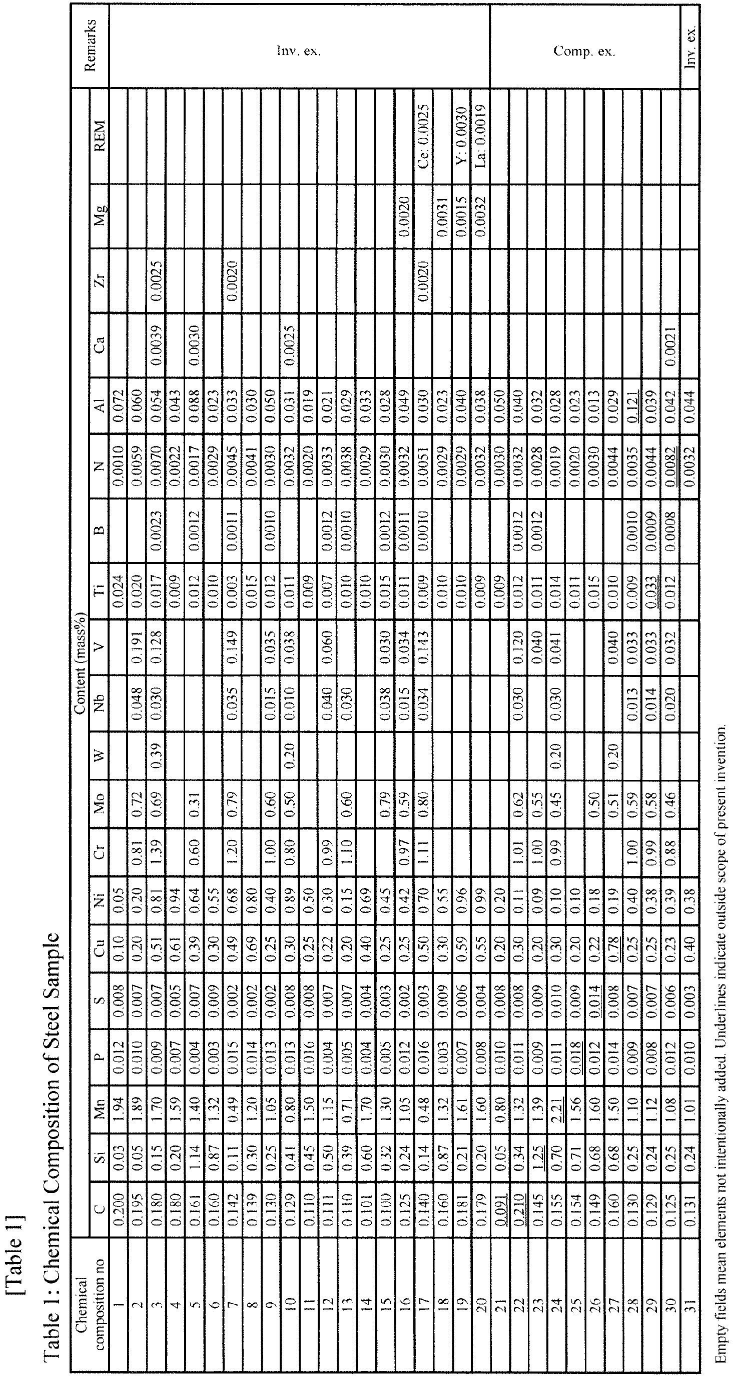

The heating temperature, hot rolling, and other production conditions of a slab at the time of production, the Brinell hardness of the produced sample, the total of the area ratios of the martensite and lower bainite at a position of 1/4 of the thickness from the surface in a thickness direction, the prior austenite average grain size at a position of 1/4 of the thickness from the surface in a thickness direction, and the value of the absorption energy of the Charpy impact test at -40°C at a position of 1/4 of the thickness from the surface in a thickness direction are shown in Table 2 and Table 3.

The total of the area ratios of the martensite and lower bainite of the metal structures at a position of 1/4 of the thickness from the surface in a thickness direction, as explained above, can be judged by observation of the steel slab using a SEM after corrosion by a Nital solution. Specifically, on an image captured by the SEM, 20 x 20 straight lines were drawn at 10 µm intervals vertically and horizontally. Whether the metal structures at the positions of the lattice points were martensite, lower bainite, or upper bainite was judged and the total of the area ratios of the martensite and lower bainite was calculated by the area%.

The prior austenite average grain size at a position of 1/4 of the thickness from the surface in a thickness direction, as explained above, was found by corroding a steel slab by a picric acid solution to expose the prior austenite grain boundaries, drawing a length 2 mm to 10 mm straight test line (may also be divided into a plurality of sections) on the image photographed by the optical microscope, and counting the number of crystal grain boundaries which the test line crossed. Next, the length of the test line was divided by the number of crystal grain boundaries which the test line crossed so as to find the average line segment length and thereby calculate the prior austenite average grain size. Further, in all of the examples according to the present invention, the average aspect ratio of the prior austenite grain sizes was 2.0 or less.

The Charpy impact test was performed based on JIS Z2242: 2005 at -40°C. The Brinell hardness was measured at a position of 1 mm from the surface in the thickness direction based on JIS Z2243: 2008 using a cemented carbide sphere of a diameter of 10 mm of an indenter by a test force of 3000 kgf (HBW10/3000).

The target values of the hardness and toughness of the abrasion resistant steel according to the present invention were a Brinell hardness of 360 to 440 and an absorption energy of the Charpy impact test at -40°C of 27J or more.

### [Table 2]

**Table 2: Production Conditions and Physical Properties of Abrasion Resistant Steel (1)**

| Prod. no. | Chem. comp. no. | Produced plate thickness (mm) | Heating temp. (°C) | 1000°C to over 825°C rolling reduction (%) | 825°C or less rolling reduction (%) | Rolling end temp. (°C) | Reheating temp. (°C) | Brinell hardness | Total of area ratios of martensite and lower bainite at position of 1/4 in thickness direction (%) | Prior austenite grain size at position of 1/4 in thickness direction (µm) | Charpy absorption energy (vE-40°C) (J) | Remarks |
|---|---|---|---|---|---|---|---|---|---|---|---|---|
| 1 | 1 | 12 | 1200 | 50 | 32 | 801 | 900 | 408 | 59 | 15 | 110 | Inv. ex. |
| 2 | 2 | 12 | 1200 | 50 | 32 | 805 | 900 | 430 | 80 | 14 | 170 | Inv. ex. |
| 3 | 3 | 20 | 1150 | 40 | 35 | 789 | 900 | 422 | 94 | 14 | 177 | Inv. ex. |
| 4 | 4 | 20 | 1150 | 40 | 35 | 788 | 900 | 402 | 60 | 13 | 99 | Inv. ex. |
| 5 | 5 | 30 | 1150 | 42 | 29 | 735 | 900 | 418 | 78 | 10 | 181 | Inv. ex. |
| 6 | 6 | 30 | 1150 | 42 | 29 | 738 | 900 | 403 | 58 | 9 | 123 | Inv. ex. |
| 7 | 7 | 50 | 1250 | 48 | 25 | 759 | 910 | 422 | 98 | 15 | 169 | Inv. ex. |
| 8 | 8 | 50 | 1250 | 48 | 25 | 762 | 910 | 400 | 72 | 16 | 103 | Inv. ex. |
| 9 | 9 | 70 | 1150 | 30 | 20 | 799 | 900 | 418 | 99 | 19 | 210 | Inv. ex. |
| 10 | 9 | 70 | 1150 | 17 | 13 | 810 | 900 | 419 | 99 | 27 | 24 | Comp. ex. |
| 11 | 9 | 70 | 1150 | 24 | 5 | 805 | 900 | 424 | 99 | 30 | 18 | Comp. ex. |
| 12 | 10 | 70 | 1150 | 30 | 20 | 800 | 900 | 435 | 89 | 18 | 167 | Inv. ex. |
| 13 | 11 | 40 | 1100 | 45 | 19 | 810 | 890 | 389 | 67 | 17 | 95 | Inv. ex. |
| 14 | 12 | 40 | 1100 | 45 | 19 | 810 | 890 | 415 | 82 | 15 | 155 | Inv. ex. |
| 15 | 12 | 60 | 1150 | 29 | 18 | 802 | 840 | 354 | 42 | 13 | 15 | Comp. ex. |
| 16 | 13 | 60 | 1150 | 29 | 18 | 798 | 890 | 428 | 100 | 21 | 201 | Inv. ex. |
| 17 | 14 | 50 | 1150 | 48 | 25 | 767 | 920 | 387 | 67 | 18 | 89 | Inv. ex. |
| 18 | 15 | 50 | 1150 | 48 | 25 | 777 | 920 | 411 | 78 | 18 | 178 | Inv. ex. |
| 19 | 16 | 70 | 1150 | 30 | 20 | 803 | 900 | 422 | 99 | 17 | 234 | Inv. ex. |
| 20 | 17 | 30 | 1250 | 48 | 25 | 765 | 910 | 418 | 97 | 14 | 189 | Inv. ex. |
| 21 | 18 | 70 | 1150 | 42 | 29 | 744 | 900 | 399 | 60 | 8 | 145 | Inv. ex. |
| 22 | 19 | 20 | 1150 | 40 | 35 | 790 | 900 | 401 | 62 | 12 | 120 | Inv. ex. |
| 23 | 20 | 20 | 1150 | 40 | 35 | 786 | 900 | 397 | 59 | 11 | 123 | Inv. ex. |
| 24 | 21 | 50 | 1150 | 48 | 25 | 790 | 900 | 352 | 65 | 18 | 198 | Comp. ex. |
| 25 | 22 | 50 | 1150 | 48 | 25 | 785 | 900 | 450 | 98 | 19 | 20 | Comp. ex. |
| 26 | 23 | 40 | 1150 | 45 | 19 | 810 | 900 | 412 | 97 | 15 | 26 | Comp. ex. |
| 27 | 24 | 40 | 1150 | 45 | 19 | 820 | 900 | 418 | 99 | 15 | 18 | Comp. ex. |
| 28 | 25 | 40 | 1150 | 45 | 19 | 822 | 900 | 392 | 88 | 17 | 25 | Comp. ex. |
| 29 | 26 | 40 | 1150 | 45 | 19 | 815 | 900 | 423 | 84 | 18 | 20 | Comp. ex. |
| 30 | 27 | 40 | 1150 | 45 | 19 | 817 | 900 | 410 | 91 | 17 | 17 | Comp. ex. |
| 31 | 28 | 40 | 1150 | 45 | 19 | 808 | 900 | 417 | 86 | 14 | 26 | Comp. ex. |
| 32 | 29 | 40 | 1150 | 45 | 19 | 817 | 900 | 428 | 93 | 16 | 14 | Comp. ex. |
| 33 | 30 | 40 | 1150 | 45 | 19 | 778 | 900 | 412 | 94 | 13 | 9 | Comp. ex. |

| | | | | | | | | | | | | |
|---|---|---|---|---|---|---|---|---|---|---|---|---|
| Underlines indicate outside scope of present invention. | | | | | | | | | | | | |

### [Table 3]

**Table 3: Production Conditions and Physical Properties of Abrasion Resistant Steel (2)**

| Prod. no. | Chem. comp. no. | Produced plate thickness (mm) | Heating temp. (°C) | 1000°C to over 825°C rolling reduction (%) | 825°C or less rolling reduction (%) | Rolling end temp. (°C) | Reheating temp. (°C) | Brinell hardness | Total of area ratios of martensite and lower bainite at position of 1/4 in thickness direction (%) | Prior austenite grain size at position of 1/4 in thickness direction (µm) | Charpy absorption energy (vE-40°C) (J) | Remarks |
|---|---|---|---|---|---|---|---|---|---|---|---|---|
| 34 | 31 | 70 | 1150 | 30 | 20 | 790 | 900 | 420 | 99 | 17 | 219 | Inv. ex. |
| 35 | 9 | 60 | 1150 | 29 | 18 | 722 | 900 | 355 | 90 | 4 | 249 | Comp. ex. |
| 36 | 9 | 60 | 1150 | 29 | 0 | 835 | 900 | 429 | 99 | 26 | 25 | Comp. ex. |
| 37 | 9 | 70 | 1150 | 40 | 32 | 769 | 900 | 415 | 87 | 16 | 220 | Inv. ex. |
| 38 | 9 | 50 | 1150 | 35 | 35 | 758 | 900 | 413 | 85 | 15 | 232 | Inv. ex. |
| 39 | 9 | 40 | 1150 | 48 | 25 | 759 | 900 | 410 | 88 | 13 | 210 | Inv. ex. |
| 40 | 9 | 20 | 1150 | 60 | 30 | 760 | 900 | 414 | 83 | 11 | 240 | Inv. ex. |
| 41 | 17 | 70 | 1150 | 40 | 32 | 770 | 890 | 408 | 97 | 15 | 210 | Inv. ex. |
| 42 | 17 | 50 | 1150 | 35 | 35 | 767 | 890 | 409 | 95 | 14 | 199 | Inv. ex. |
| 43 | 17 | 40 | 1150 | 48 | 25 | 767 | 890 | 402 | 96 | 13 | 221 | Inv. ex. |
| 44 | 17 | 20 | 1150 | 60 | 30 | 760 | 890 | 404 | 96 | 11 | 229 | Inv. ex. |
| 45 | 9 | 70 | 1150 | 40 | 32 | 813 | 900 | 420 | 99 | 20 | 138 | Inv. ex. |
| 46 | 9 | 50 | 1150 | 35 | 35 | 804 | 900 | 419 | 99 | 17 | 154 | Inv. ex. |
| 47 | 9 | 40 | 1150 | 48 | 25 | 804 | 900 | 418 | 100 | 16 | 145 | Inv. ex. |
| 48 | 9 | 20 | 1150 | 60 | 30 | 805 | 900 | 418 | 97 | 14 | 158 | Inv. ex. |
| 49 | 9 | 70 | 1150 | 52 | 0 | 850 | 900 | 421 | 100 | 37 | 9 | Comp. ex. |
| 50 | 9 | 50 | 1150 | 45 | 0 | 848 | 900 | 418 | 99 | 34 | 19 | Comp. ex. |
| 51 | 9 | 40 | 1150 | 56 | 0 | 852 | 900 | 421 | 99 | 33 | 22 | Comp. ex. |
| 52 | 9 | 20 | 1150 | 72 | 0 | 846 | 900 | 420 | 99 | 27 | 24 | Comp. ex. |
| 53 | 17 | 70 | 1150 | 40 | 0 | 844 | 890 | 417 | 99 | 35 | 10 | Comp. ex. |
| 54 | 17 | 50 | 1150 | 45 | 0 | 849 | 890 | 418 | 99 | 34 | 16 | Comp. ex. |
| 55 | 17 | 40 | 1150 | 56 | 0 | 852 | 890 | 419 | 98 | 31 | 20 | Comp. ex. |
| 56 | 17 | 20 | 1150 | 72 | 0 | 838 | 890 | 418 | 98 | 26 | 26 | Comp. ex. |
| 57 | 9 | 40 | 1150 | 55 | 0 | 890 | No reheating | 401 | 67 | 65 | 21 | Comp. ex. |
| 58 | 9 | 40 | 1150 | 48 | 25 | 770 | No reheating | 351 | 48 | 39 | 25 | Comp. ex. |

| | | | | | | | | | | | | |
|---|---|---|---|---|---|---|---|---|---|---|---|---|
| Underlines indicate outside scope of present invention. | | | | | | | | | | | | |

As shown in Table 2 and Table 3, the invention examples of Production Nos. 1 to 9, Nos. 12 to 14, and Nos. 16 to 23, 34, and 37 to 48 had chemical compositions, heating temperatures, rolling reductions by hot rolling at 1000 to over 825°C, rolling reductions by hot rolling at 825 to 730°C, temperatures at the end of hot rolling, and reheating temperatures satisfying the scopes of the present invention. As a result, the totals of the area ratios of the martensite and lower bainite and the prior austenite average grain sizes were within the scopes of the present invention, the Brinell hardnesses were within the range of 360 to 440 targeted by the present invention, and the absorption energies of the Charpy impact test at -40°C satisfied the 27J or more targeted by the present invention.

On the other hand, Production No. 10, No. 11, No. 15, and Nos. 24 to 33 of Table 2 and Production No. 35, No. 36, and Nos. 49 to 58 of Table 3 failed to satisfy the above targets for one or both of the Brinell hardness and absorption energy of the Charpy impact test at -40°C.

Production No. 10 is an example in which the rolling reduction at 1000 to over 825°C was low, so the prior austenite average grain size at a position of 1/4 of the thickness from the surface in a thickness direction was more than 23 µm resulting in the absorption energy of the Charpy impact test at -40°C failing to reach the target value.

Production No. 11 is an example in which the rolling reduction at 825 to 730°C was low, so the prior austenite average grain size at a position of 1/4 of the thickness from the surface in a thickness direction was more than 23 µm resulting in the absorption energy of the Charpy impact test at -40°C failing to reach the target value.

Production No. 15 is an example in which the reheating temperature was less than 860°C, so the hardenability fell and in which the total of the area ratios of the martensite and lower bainite became less than 50%, whereby the Brinell hardness and absorption energy of the Charpy impact test at -40°C failed to reach the target values.

Production No. 24 is an example in which the C content was small and in which the Brinell hardness failed to reach the target value. Further, Production No. 25 is an example in which the C content was great and the Brinell hardness and absorption energy of the Charpy impact test at -40°C failed to reach the target values. Furthermore, Production No. 26 is an example where the Si content was great, Production No. 27 is an example where the Mn content was great, Production No. 28 is an example where the P content was great, Production No. 29 is an example where the S content was great, Production No. 30 is an example where the Cu content was great, Production No. 31 is an example where the Al content was great, Production No. 32 is an example where the Ti content was great, and Production No. 33 is an example where the N content was great, so in each of the steel samples, the absorption energy of the Charpy impact test at -40°C failed to reach the target value.

Further, Production No. 35 of Table 3 is an example in which the temperature at the end of the hot rolling was less than 730°C, so the prior austenite grains after reheating and quenching were excessively refined, the hardenability fell, and the Brinell hardness failed to reach the target value.

Production No. 36 and Nos. 49 to 56 are examples in which the rolling reductions at 825 to 730°C were 0%, so the prior austenite grain sizes after reheating and quenching exceeded 23 µm and thereby the absorption energies of the Charpy impact tests at 40°C failed to satisfy the target values.

Production No. 57 is an example in which the rolling reduction at 825 to 730°C was 0% and reheating and quenching was not performed (was a DQ material), so the prior austenite grain size exceeded 23 µm and thereby the absorption energy of the Charpy impact test at -40°C failed to reach the target value.

Production No. 58 is an example in which reheating and quenching was not performed (was a DQ material), so the prior austenite grain size exceeded 23 µm and the total of the area ratios of martensite and lower bainite became less than 50%. Due to this, the Brinell hardness and absorption energy of the Charpy impact test at -40°C failed to reach the target values.

### INDUSTRIAL APPLICABILITY

According to the present invention, it is possible to obtain abrasion resistant steel having excellent low temperature toughness able to be used even in cold regions.

## Claims

1. Abrasion resistant steel having a chemical composition comprising, by mass%,
C: 0.10 to 0.20%,
Si: 0.01 to 1.20%,
Mn: 0.01 to 2.00%,
P: less than 0.017%,
S: 0.010% or less,
Cu: 0.01 to 0.70%,
Ni: 0.01 to 1.00%,
Cr: 0 to 1.50%,
Mo: 0 to 0.80%,
W: 0 to 0.50%,
Nb: 0 to 0.050%,
V: 0 to 0.20%,
Ti: 0 to 0.030%,
B: 0 to 0.0030%,
N: 0.0001 to 0.0070%,
Al: 0.001 to 0.10%,
Ca: 0 to 0.0050%,
Zr: 0 to 0.0050%,
Mg: 0 to 0.0050%,
REM: 0 to 0.0050% and
a balance of Fe and impurities,
having metal structures having a total area ratio of martensite and lower bainite of 50 to 100% and a prior austenite average grain size of 5 to 23 µm at a position of 1/4 of a thickness from a surface in a thickness direction, and
having a Brinell hardness of 360 to 440 at a position of 1 mm from the surface in the thickness direction.

2. The abrasion resistant steel according to claim 1, wherein a thickness is 15 mm or more.

3. A method for producing abrasion resistant steel, the method comprising:
heating a slab having a chemical composition according to claim 1 or 2 to 1000 to 1350°C,
hot rolling the heated slab at 1000 to over 825°C by a 20% or more rolling reduction, then at 825 to 730°C by a 10% or more rolling reduction, and ending the hot rolling at a temperature of 730°C or more,
cooling the hot rolled steel plate, and
reheating the cooled steel plate to 860°C or more, then quenching the reheated steel plate.
